Europäisches Patentamt

European Patent Office

Office européen des brevets

(19)

(11) Publication number: **0 159 109**
**B1**

# EUROPEAN PATENT SPECIFICATION

(12)

(45) Date of publication of patent specification: **04.05.88**

(21) Application number: **85300656.7**

(22) Date of filing: **31.01.85**

(51) Int. Cl.⁴: **B 23 H 7/18,** B 23 H 1/02, B 23 H 3/02

(54) Apparatus for detecting discharge gap in electric discharge machining.

(30) Priority: **01.02.84 JP 17491/84**

(43) Date of publication of application:
**23.10.85 Bulletin 85/43**

(45) Publication of the grant of the patent:
**04.05.88 Bulletin 88/18**

(84) Designated Contracting States: .
**DE FR GB**

(56) References cited:
**EP-A-0 032 023**
**EP-A-0 124 625**
**GB-A-2 012 648**
**US-A-3 973 104**
**US-A-4 339 650**

**PATENT ABSTRACTS OF JAPAN, unexamined applications, field M, vol. 4, no. 147, October 16, 1980, THE PATENT OFFICE JAPANESE GOVERNMENT, page 153 M 36**

(73) Proprietor: **NEC CORPORATION**
**33-1, Shiba 5-chome, Minato-ku**
**Tokyo 108 (JP)**

(72) Inventor: **Matsumoto, Katsuhiro**
**c/o NEC Corporation 33-1, Shiba 5-chome**
**Minato-ku Tokyo (JP)**
Inventor: **Fujii, Akira**
**c/o NEC Corporation 33-1, Shiba 5-chome**
**Minato-ku Tokyo (JP)**

(74) Representative: **Jackson, David Spence et al**
**REDDIE & GROSE 16, Theobalds Road**
**London, WC1X 8PL (GB)**

## Description

The present invention relates to an apparatus for detecting a discharge gap between a machining electrode and a workpiece in electric discharge machining in which an intermittent DC voltage in the form of a pulse voltage is applied between said machining electrode and said workpiece to thereby machine said workpiece, comprising peak detecting means responsive to a discharge voltage between said machining electrode and said workpiece for detecting a peak voltage of said discharge voltage; and waiting time detecting means responsive to the discharge voltage between said machining electrode and said workpiece for detecting a waiting time between the leading edge of said pulse voltage and the start of discharge occurrence.

In electric discharge machining, an intermittent DC voltage in the form of a pulse voltage is applied between a machining electrode and a workpiece to thereby cause electric discharge which is used to machine the workpiece to a desired depth and configuration. During the machining, occurrence of the electric discharge varies slightly in accordance with the discharge gap between the machining electrode and the workpiece even when the supplied DC voltage is constant. As a result, the surface finish of the workpiece and the machining speed are disadvantageously variable. For this reason, in actual machining, in order to obtain a uniform machining quality and a desired machining speed, servocontrol is employed in which the discharge gap is measured by detecting a discharge voltage, and either the workpiece or the machining electrode is finely controlled such that a desired discharge gap is maintained. One example of this kind of the servocontrol is shown in US—A—4,339,650 to Tanaka et al, "Electric Discharge Machining Apparatus".

To measure the discharge gap, it is conventional practice to detect a discharge initiating voltage (peak voltage) or an average value of the discharge voltage taken from the machining electrode. By such conventional detecting methods, however, it is not possible to effect accurate detection over a wide gap range. For instance, by the conventional method employing the peak voltage, since the peak voltage is always equal to the value of the applied pulse voltage itself in an area where the discharge gap is wide, that is, in a case where discharge occurs after a certain period of time elapses after application of the pulse voltage, it is not possible to detect any change in the actual discharge gap. By the conventional method employing the average value, on the other hand, although it is possible to effect approximate detection in the area where the discharge gap is wide, it is not possible to accurately detect the discharge gap in an area, where the discharge gap is narrow, that is, in a case where discharge occurs immediately after the application of the pulse voltage.

In US—A—3,973, 104 there is disclosed an apparatus of the kind defined at the beginning, and having first converting means for converting the peak value into first digital data, second converting means for converting the wait time into second digital data, first compensating means for compensating the first digital data in accordance with a machining condition, second compensating means for compensating the second digital data in accordance with a machining condition, and means for computing a value related to the discharge gap by adding the digital data from the first and second compensating means discharge gap data.

It is a primary object of the present invention to provide an improved discharge gap detecting apparatus which is capable of accurately detecting the discharge gap over a wide gap range from a narrow gap area where the discharge initiating voltage is smaller than the voltage of the applied pulse voltage to a wide gap area where electric discharge occurs after a long period of time elapses after application of the pulse voltage, thus making it possible to enlarge a controllable discharge gap.

According to the present invention, an apparatus of the kind defined at the beginning is characterised by computing means for computing said discharge gap on the basis of said peak voltage detected by said peak detecting means, said waiting time detected by said waiting time detecting means, the voltage of said intermittent DC voltage and a machining condition.

The invention will now be described in more detail, solely by way of example, with reference to the accompanying drawings, in which:

Fig. 1 shows a block diagram of an embodiment of the present invention; and

Figs. 2(a) to 2(f) are charts for explaining the operation of the embodiment shown in Fig. 1.

Description of the preferred embodiment

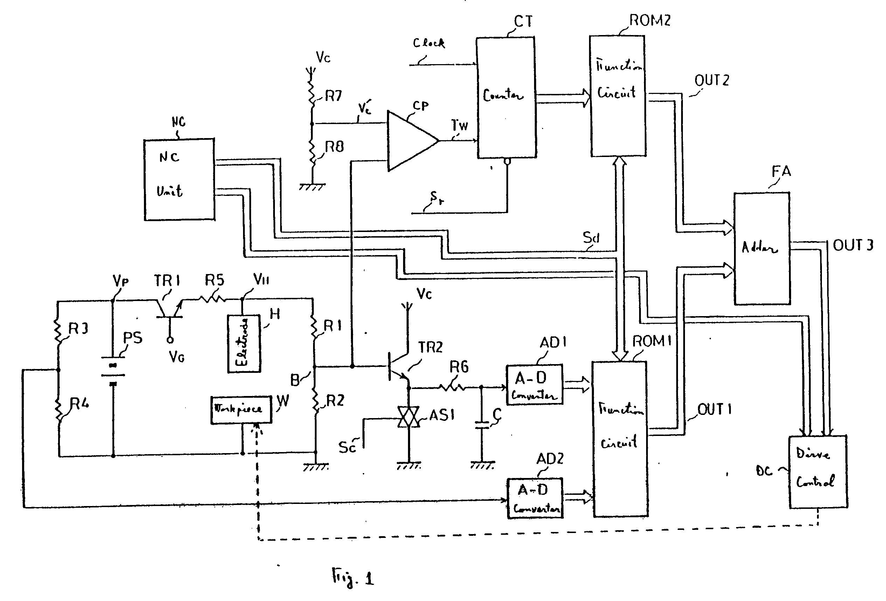

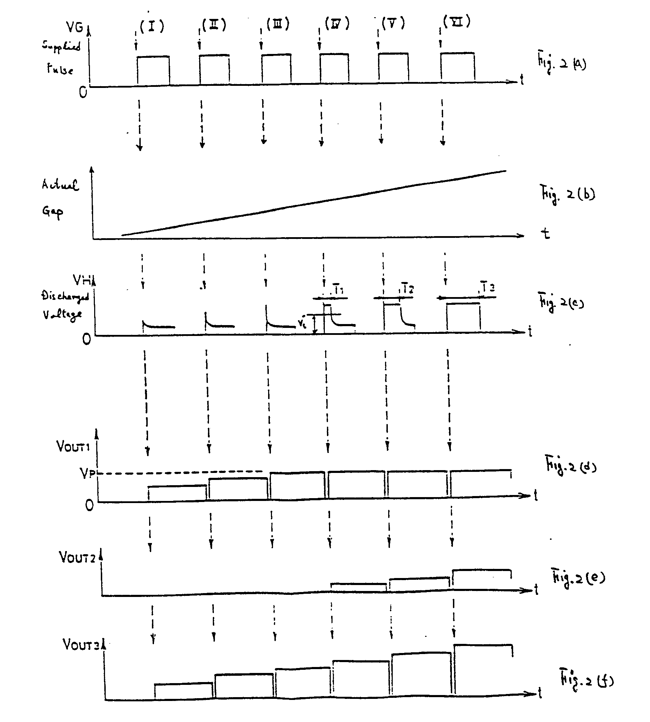

The present invention will be described hereinunder through an embodiment with reference to the accompanying drawings. In Fig. 1 showing the embodiment of the present invention, a plus side of a DC power supply PS (voltage $V_p$) for machining is connected to a collector of a switching transistor $TR_1$, while a minus side is grounded. An ON/OFF gate signal $V_G$ is supplied to the base of the switching transistor $TR_1$. From the emitter of the switching transistor $TR_1$, an intermittent pulse voltage, such as those shown in Fig. 2(a), is supplied to a machining electrode H through a resistor $R_s$. On the other hand, a workpiece W is grounded.

When a discharge gap between the machining electrode H and the workpiece W changes in the manner shown in Fig. 2(b), the waveform of the discharge voltage between the machining electrode H and the workpiece W is such as that shown in Fig. 2(c). In Figs. 2(b) to 2(f), cases (I), (II) and (III) represent cases where the discharge gap is so narrow that discharge occurs at the same time as the supply of the pulse voltage; (IV) and (V) represent cases where the discharge gap is wide to have a certain degree and, therefore, discharge occurs at the time when certain periods of time $T_1$ and $T_2$ elapse after the supply of the pulse voltage; and (VI) represents a case where the discharge gap is so wide that no discharge occurs. As described above, in the cases (I), (II) and (III), it is possible to accurately measure the discharge gap by detecting the peak voltage. In the cases (IV) and (V), however, the peak voltage is always equal to the value of the supplied pulse voltage. Therefore, it is impossible to effect any accurate detection. On the other hands, in any of these cases, particularly in the cases (I), (II) and (III), it is not possible to accurately measure the discharge gap by using an average value.

The discharge voltage between the machining electrode H and the workpiece W, that is, a primary machining gap signal $V_H$, is grounded through machining gap voltage detecting resistors $R_1$ and $R_2$. From the node between the resistors $R_1$ and $R_2$, a divided machining gap voltage B is picked up and supplied to the base of a transistor $TR_2$. A collector voltage $V_C$ is supplied to the collector of the transistor $TR_2$. The emitter of the transistor $TR_2$ is grounded through an analog switch $AS_1$ and is also connected through a resistor $R_6$ to one terminal of a capacitor C and an A/D converter $AD_1$. A switching signal $S_C$, which short-circuits the emitter just before the supply of each pulse voltage, is supplied to the analog switch $A_S$. The other terminal of the capacitor C is grounded. Accordingly, when the machining pulse voltage is intermittently supplied, the capacitor C is charged, for each pulse voltage, to a voltage between the machining electrode H and the workpiece W, that is, the peak voltage of the discharge voltage. The peak voltage of analog state charged in the capacitor C is converted by the A/D converter $AD_1$ into a digital signal, which is supplied to a function circuit $ROM_1$. On the other hand, the output voltage $V_P$ from the DC power supply PS is grounded through resistors $R_3$ and $R_4$. From the node between the resistors $R_3$ and $R_4$, a divided voltage is picked up and supplied to an A/D converter $AD_2$. Accordingly, a digital signal corresponding to the voltage of the power supply PS is taken out from the A/D converter $AD_2$ and is supplied to the function circuit $ROM_1$. Machining data $S_d$ are also applied to the function circuit $ROM_1$. Accordingly, various data, that is, the gap data detected by using the peak voltage from the A/D converter $AD_1$, the data representing the voltage of the machining power supply PS, and the data $S_d$ representing a machining condition are applied to the function circuit $ROM_1$. In the function circuit $ROM_1$, the gap data are modified in accordance with the supply voltage and the machining condition, and the modified gap data are delivered as compensated gap data $OUT_1$. Such function circuit can be easily realized by employing a read-only memory (ROM). Fig. 2(d) shows gap data detected by using the peak voltage. In each of the cases (I), (II) and (III), the data correctly represents the discharge gap.

The following is a description of gap-detecting by using a discharge waiting time. The discharge voltage B from the node between the resistors $R_1$ and $R_2$ is supplied to one input terminal of a comparator CP. The voltage $V_C$ is divided by the resistors $R_7$ and $R_8$, and the divided voltage $V'_C$ is supplied to the other input terminal of the comparator CP. In this case, the divided voltage $V'_C$ is, as shown in Fig. 2(c), selected to be a value between the supplied voltage and a discharge maintaining voltage in which discharge is continued. Accordingly, a pulse $T_w$ having widths corresponding to a waiting time ($T_1$ and $T_2$ in Fig. 2(c), for example), which is a interval between the moment when the supply of the voltage is started and the moment when discharge is started, is delivered from the comparator CP and supplied to a binary counter CT. A clock signal and a reset signal $S_r$ are supplied to the counter CT. In this case, the reset signal $S_r$ is generated just before the supply of the pulse voltage. As a result, numerical data corresponding to the waiting time is delivered from the counter CT. The value from the counter CT is supplied to a function circuit $ROM_2$, to which the machining data $S_d$ is also applied. The function circuit $ROM_2$ is supplied with the gap data obtained by using the waiting time and the data $S_d$ representing the machining condition. The gap data from the counter CT is modified in accordance with the data $S_d$ and the modified data is delivered as compensated gap data $OUT_2$. Fig. 2(e) shows the gap data obtained by using the waiting time. As shown in Fig. 2(e), this data correctly represents a partial discharge gap which can not be detected by using the peak voltage.

The gap data $OUT_2$ from the function circuit $ROM_2$ in accordance with the discharge waiting time and the gap data $OUT_1$ from the function circuit $ROM_1$ in accordance with the peak value are added together by an adder FA. Fig. 2(f) shows gap data $OUT_3$ output from the adder FA. As shown in Fig. 2(f), the gap data $OUT_3$ correctly represents the actual discharge gap between the machining electrode H and the workpiece W. The gap data $OUT_3$ delivered from the adder FA is supplied to a drive control circuit DC. The drive control circuit DC controls the discharge gap between the machining electrode H and the workpiece W to maintain a predetermined gap in accordance with the gap data $OUT_3$. It is to be noted that the drive control circuit DC is supplied with a machining instruction from a numerical control unit NC. The data $S_d$ representing the machining condition which vary in accordance with the machining electrode H, the workpiece W, a machining fluid, etc. is also supplied from the numerical control unit NC.

As described above, the discharge gap can be accurately detected in a wide range by combining the gap data based on the peak voltage of the discharge voltage and the other gap data based on the waiting time corresponding to the period between the start of the pulse voltage supply and the start of the discharge. Thereby, the present invention effectively enlarges a controllable discharge gap in machining, so that it is advantageously possible to greatly increase a machining speed.

## Claims

1. An apparatus for detecting a discharge gap between a machining electrode (H) and a workpiece (W) in electric discharge machining in which an intermittent DC voltage in the form of a pulse voltage is applied between said machining electrode (H) and said workpiece (W) to thereby machine said workpiece, comprising:

peak detecting means (R1, R2, TR2, R6, C, AS1) responsive to a discharge voltage between said machining electrode (H) and said workpiece (W) for detecting a peak voltage of said discharge voltage; and

waiting time detecting means (R1, R2, R7, R8, CP, CT) responsive to the discharge voltage between said machining electrode (H) and said workpiece (W) for detecting a waiting time between the start of said pulse voltage and the start of discharge occurrence, characterized by further comprising computing means (ROM1, ROM2, FA) for computing said discharge gap on the basis of said peak voltage detected by said peak detecting means (R1, R2, TR2, R6, C, AS1), said waiting time detected by said waiting time detecting means (R1, R2, R7, R8, CP, CT), the voltage of said intermittent DC voltage and a machining condition (Sd).

2. An apparatus according to claim 1, characterised by first converting means (AD1) for converting said peak value into first digital data:

second converting means (CT) for converting said wait time into second digital data: said computing means comprising:

first compensating means (ROM1) for compensating said first digital data in accordance with a voltage of said intermittent DC voltage and a machining condition:

second compensating means (ROM2) for compensating said second digital data in accordance with a machining condition (Sd), and

means (FA) for computing said discharge gap by adding the digital data from said first and second compensating means.

## Patentansprüche

1. Vorrichtung zum Erfassen einer Entladungsstrecke zwischen einer Behandlungselektrode (H) und einem Werkstück (W) bei der elektrischen Engladungsbehandlung, bei der eine intermittierende Gleichspannung in Form einer Pulsspannung zwischen der Behandlungselektrode (H) und dem Werkstück (W) angelegt wird, wodurch das Werkstück behandelt wird, mit:

Spitzendetektoreinrichtungen (R1, R2, TR2, R6, C, AS1), die auf eine Entladespannung zwischen der Behandlungselektrode (H) und dem Werkstück (W) ansprechen, zum Erfassen einer Spitzenspannung der Entladespannung; und

Wartezeit-Detektoreinrichtungen (R1, R2, R7, R8, CP, CT), die auf die Entladespannung zwischen der Behandlungselektrode (H) und dem Werkstück (W) ansprechen, zum Erfassen der Wartezeit zwischen dem Beginn der Pulsspannung und dem Beginn der Entladung, gekennzeichnet durch Recheneinrichtungen (ROM1, ROM2, FA) zum Berechnen der Entladungsstrecke auf der Basis der von den Spitzendetektoreinrichtungen (R1, R2, TR2, R, C, AS1) erfaßten Spitzenspannung, der von den Wartezeit-Detektoreinrichtungen (R1, R2, R7, R8, CP, CT) erfaßten Wartezeit, dem Spannungswert der intermittierenden Gleichspannung und einer Behandlungsbedingung (Sd).

2. Vorrichtung nach Anspruch 1, gekennzeichnet durch erste Wandeleinrichtungen (AD1) zum Wandeln des Spitzenwerts in erste Digitaldaten, zweite Wandeleinrichtung (CT) zum Wandeln der Wartezeit in zweite Digitaldaten, wobei die Recheneinrichtungen aufweisen:

erste Kompensiereinrichtungen (ROM1) zum Kompensieren der ersten Digitaldaten entsprechend einem Spannungswert der intermittierenden Gleichspannung und einer Behandlungsbedingung,

zweiten Kompensiereinrichtungen (ROM2) zum Kompensieren der zweiten Digitaldaten entsprechend einer Behandlungsbedingung (Sd) und

Einrichtungen (FA) zum Berechnen der Entladungsstrecke durch Addieren der Digitaldaten von der ersten und zweiten Kompensiereinrichtung.

## Revendications

1. Appareil pour détecter un intervalle de décharge entre une électrode d'usinage (H) et une pièce (W) dans un usinage par décharge électrique dans lequel une tension intermittente en courant continu sous forme d'une tension à impulsions est appliquée entre l'électrode d'usinage (H) et la pièce (W) afin d'usiner ainsi la pièce, comprenant:

—un moyen de détection de pointe (R1, R2, TR2, R6, C, AS1) répondant à une tension de décharge entre l'électrode d'usinage (H) et la pièce (W) pour détecter une valeur de pointe de la tension de décharge, et

—un moyen de détection de temps d'attente (R1, R2, R7, R8, CP, CT) répondant à la tension de décharge entre l'électrode d'usinage (H) et la pièce (W) pour détecter un temps d'attente entre le commencement de la tension à impulsions et le début de l'apparition de la décharge, caractérisé en ce qu'il comprend en outre un moyen de calcul (ROM1, ROM2, FA) pour calculer l'intervalle de décharge sur la base de la tension de pointe détectée par le moyen de détection de pointe (R1, R2, TR2, R6, C, AS1), le temps d'attente détecté par le moyen de détection de temps d'attente (R1, R2, R7, R8, CP, CT), la valeur de la tension intermittente en courant continu et une condition d'usinage (Sd).

2. Appareil selon la revendication 1, caractérisé par un premier moyen de conversion (AD1) pour convertir la valeur de pointe en une première donnée numérique;

—un second moyen de conversion (CT) pour convertir le temps d'attente en seconde donnée numérique; le moyen de calcul comprenant:

—un premier moyen de compensation (ROM1) pour compenser la première donnée numérique en conformité avec une valeur de la tension intermittente en courant continu et une condition d'usinage;

—un second moyen de compensation (ROM2) pour compenser la seconde donnée numérique en conformité avec une condition d'usinage (Sd), et

—un moyen (FA) pour calculer l'intervalle de décharge en ajoutant les données numériques provenant des premier et second moyens de compensation.

Fig. 1

Fig. 2 (A)

Fig. 2 (b)

Fig. 2 (c)

Fig. 2 (d)

Fig. 2 (e)

Fig. 2 (f)